# EUROPEAN PATENT SPECIFICATION

(11) **EP 3 461 058 B1**
(45) Date of publication and mention of the grant of the patent: **29.04.2020**
(21) Application number: 18199994.7
(22) Date of filing: 22.06.2007
(51) Int. Cl.: H04L 9/08, H04L 29/06, H04W 12/04

(54) **METHOD AND SYSTEM FOR KEY DISTRIBUTION IN A WIRELESS COMMUNICATION NETWORK**
VERFAHREN UND SYSTEM ZUR SCHLÜSSELVERTEILUNG IN EINEM DRAHTLOSKOMMUNIKATIONSNETZWERK
PROCÉDÉ ET SYSTÈME DE RÉPARTITION DE CLÉ DANS UN RÉSEAU DE COMMUNICATION SANS FIL

(30) Priority: 23.06.2006 CN 200610090103
(43) Date of publication of application: 27.03.2019
(62) Divisional of application: 17176519.1
(73) Proprietor: Huawei Technologies Co., Ltd., Longgang District Shenzhen, Guangdong 518129 (CN)
(72) Inventor: Hu, Weihua, Shenzhen, Guangdong (CN); Chen, Jing, Shenzhen, Guangdong (CN)
(74) Representative: Kreuz, Georg Maria

(56) References cited:
- US-A1- 2003 207 696
- W. Zhang: "Interworking Security in Heterogeneous Wireless IP Networks", Proceedings of 3rd International Conference on Networking (ICN '04), March 2004 (2004-03), pages 1-7, XP002577596, Retrieved from the Internet: URL:http://129.69.170.1/printable/Content/ Publications/Archive/Zh_ICN04_36327.pdf [retrieved on 2010-04-14]
- RAFAELI S ET AL: "A survey of key management for secure group communication", ACM COMPUTING SURVEYS, ACM, NEW YORK, NY, US, US LNKD- DOI:10.1145/937503.937506, vol. 35, no. 3, 1 September 2003 (2003-09-01), pages 309-329, XP002481548, ISSN: 0360-0300

## Description

### Field of the Invention

The present invention relates to a wireless communication field and in particular to a method and system for key distribution in a wireless communication network.

### Background of the Invention

With the rapid growth of IP-based services and traffics, the Third Generation Partnership Project (3GPP), as an access technology, gradually fails to adapt to such changes. While new access technologies, such as wireless local area network (WLAN) and worldwide interoperability for microwave access (WiMAX), spring up, imposing a direct threat to the 3GPP network. To maintain the competitive edge of the 3GPP system in the future 10 years or a longer period, the access technology evolution is ongoing in the 3GPP organization. The 3GPP starts to work on the long-term evolution (LTE) of 3GPP network access technology, especially the enhancement of the packet switching technology implemented in the 3GPP system so as to maintain the leading position of the 3GPP access system in terms of performance and cost-saving.

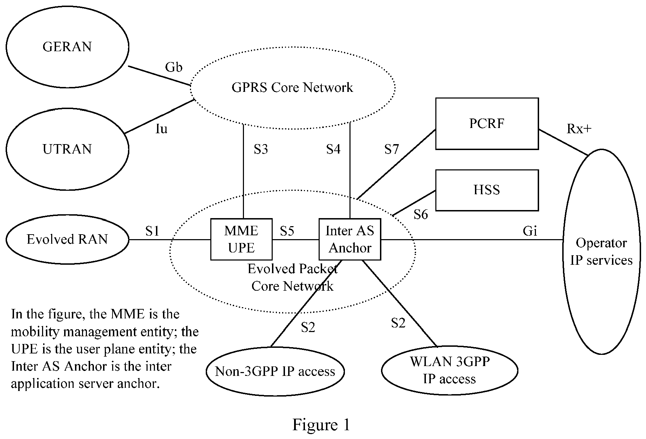

Figure 1 shows the evolved system architecture. The main entities in an evolved packet core network (EPC) include: a mobility management entity (MME), adapted to manage the mobility of the control plane, including user context and mobility state management, distributing a temporary mobile station identifier(TMSI), and security function; a user plane entity (UPE), adapted to initiate paging for downlink data in idle state, manage and store IP bearer parameter and routing information in the network; and an inter AS anchor (IASA), serving as the user plane anchor between different systems. The UPE may exist independently or as an entity together with the MME. The UPE may also exist as an entity together with the IASA, or be moved to the access network and exist as an entity together with an eNB. In the figure, the interfaces and their functions are not finally defined. The user information is stored in a home subscriber server (HSS).

The evolution of the 3GPP network is intended to reduce the delay and response time, increase the data rate, enhance the system capacity and coverage, and reduce the operation cost. In terms of security, the user security mechanism in the evolved network should be guaranteed with at least the same security level as in the present 2G and 3G systems.

At present, in a universal mobile telecommunication system (UMTS), a secure terminating point is in a radio network controller (RNC). A user equipment (UE) and the RNC perform enciphering/deciphering and integrity protection to provide the encryption protection for user data, and encryption and integrity protection for the signaling between the UE and the RNC. Under this circumstance, the UE and the RNC need only a cipher key (CK) and an integrity key (IK). The distribution mode of CK and IK is as follows:
1. The UE and a network perform authentication. After authentication, the UE and a mobile switching center/visitor location register (MSC/VLR) in a core network receive the CK and the IK.
2. The in the core network or the serving GPRS support node (SGSN) distributes the CK and the IK to the RNC.

Whereas, in the evolved wireless network, three different security associations may be involved to respectively protect the security of a access stratum (AS) signaling, a non-access stratum (NAS) signaling and user data, that is, the security of the user plane, the AS signaling plane and the NAS signaling plane. The security of the user plane is terminated in the core network or the access network. The security of the AS signaling and the NAS signaling in the signaling plane are respectively terminated in the access network and the core network. Specifically, the security of the user plane is terminated on the UPE in the core network or on the base station in the access network. The security of the AS signaling is terminated on the base station in the evolved access network. The security of the NAS signaling may be terminated on the MME or the IASA in the core network, which is not determined yet. Therefore, in the evolved network, it is necessary to distribute the above three sets of keys associated with user plane security and the signaling plane security to entities which perform security operation in the network and the UE.

W. Zhang, "Interworking Security in Heterogeneous Wireless IP Networks", Proceedings of 3rd International Conference on Networking (ICN '04), discloses a key exchange method in a UMTS network.

United States Patent Application Publication document US2003/0207696 to Willenegger et al. discloses Multimedia Broadcast and Multicast Service in a wireless network.

The existing method for distributing keys in the UMTS can only deduce and distribute a group of keys to an entity performing security operation in the network and UE. Therefore, it is necessary to formulate a method for deducing and distributing keys in the evolved network.

### Summary of the Invention

Embodiments of the present invention provide a method for key distribution in a wireless communication network so as to deduce and distribute keys in the evolved network for protecting security of the AS signaling, the NAS signaling and user data.

A method for key distribution in a wireless communication network, including: receiving, by a mobility management entity, MME, a root key from a home subscriber server, HSS; deducing, by the MME, the keys for protecting the security of an access stratum, AS, signaling, a non-access stratum, NAS, signaling and user data according to the root key; and sending, by the MME, the keys to entities performing security operation.

A method for key distribution in a wireless communication network, including: deducing, by a user equipment, UE, a root key; and deducing, by the UE, the keys for protecting the security of an access stratum, AS, signaling, a non-access stratum, NAS, signaling and user data according to the root key.

A mobility management entity, MME, including;
a key deducing module, configured to deduce the keys for protecting the security of an access stratum, AS, signaling, a non-access stratum, NAS, signaling and user data according to a root key received from a home subscriber server, HSS; and
a key distributing module, configured to send the keys to entities performing security operation.

A system for key distribution in a wireless communication network, including the MME and the HSS, wherein the HSS includes:
a root key deducing module, configured to deduce the root key and send the root key to the MME.

A user equipment, UE, including:
a key deducing module, configured to deduce a root key and deduce the keys for protecting the security of an access stratum, AS, signaling, a non-access stratum, NAS, signaling and user data according to the root key.

In the above embodiments of the present invention, the network deduces keys for protecting the security of the AS signaling, the NAS signaling and user data, and distributes the keys to entities performing relevant security operation in the network and the UE. The UE may deduce keys for protecting the security of the AS signaling, the NAS signaling and user data, so that the keys for protecting the security of the AS signaling, the NAS signaling and user data in a wireless communication network are deduced and distributed and the security of network communication is guaranteed.

### Brief Description of the Drawings

Figure 1 shows the architecture of a wireless evolved network according to the prior art;
Figure 2 shows a flow chart illustrating the key distributing procedure according to a first embodiment of the present invention;
Figure 3 shows a diagram illustrating the HSS or the UE deduces keys according to a first embodiment of the present invention;
Figure 4 shows a flow chart illustrating the key distribution procedure according to a second embodiment of the present invention;
Figure 5 shows a diagram illustrating the HSS or the UE deduces a root key according to a second embodiment of the present invention;
Figure 6 shows a diagram illustrating the MME or the UE deduces keys according to a second embodiment of the present invention;
Figure 7 shows another schematic diagram illustrating the MME or the UE deduces keys according to a second embodiment of the present invention;
Figure 8 shows a flow chart illustrating the key distribution procedure according to a third embodiment of the present invention;
Figure 9 is a schematic diagram of the key distributing system of the evolved mobile communication network according to an embodiment of the present invention;
Figure 10 is a schematic diagram of a first key distributing system according to an embodiment of the present invention;
Figure 11 is a schematic diagram of a second key distributing system according to an embodiment of the present invention; and
Figure 12 is a schematic diagram of a third key distributing system according to an embodiment of the present invention.

### Detailed Description of the Invention

Embodiments of the present invention provide a method for key distribution in a mobile communication network. The network respectively deduces keys for protecting the security of the AS signaling, the NAS signaling and user data, and distributes the deduced keys to a UE and entities performing relevant security operation in the network; the UE may also deduces keys for protecting the security of the AS signaling, the NAS signaling and user data separately.

In the embodiments of the invention, the deduction and distribution of the keys for protecting the security of the AS signaling, the NAS signaling and user data may be implemented through two ways: one is that the network deduces the keys for protecting the security of the AS signaling, the NAS signaling and user data, and notifies the UE to deduce same keys, and then the network distributes the keys to entities performing relevant security operation; the other is that the network deduces the keys for protecting the security of the AS signaling, the NAS signaling and user data, and respectively distributes the keys to the UE and the entities performing relevant security operation.

The network further has two ways to deduce the keys for protecting the security of the AS signaling, the NAS signaling and user data: one is that a server for storing user information in the network directly deduces the keys for protecting the security of the AS signaling, the NAS signaling and user data; the other is that the server and an MME deduce the keys for protecting the security of the AS signaling, the NAS signaling and user data cooperatively.

The following specifically describes the embodiments of the present invention with drawings.

### Embodiment 1

In this embodiment, the HSS and the UE respectively deduce the keys for protecting the security of the AS signaling, the NAS signaling and user data according to a shared key, and the MME distributes the keys to entities performing relevant security operation.

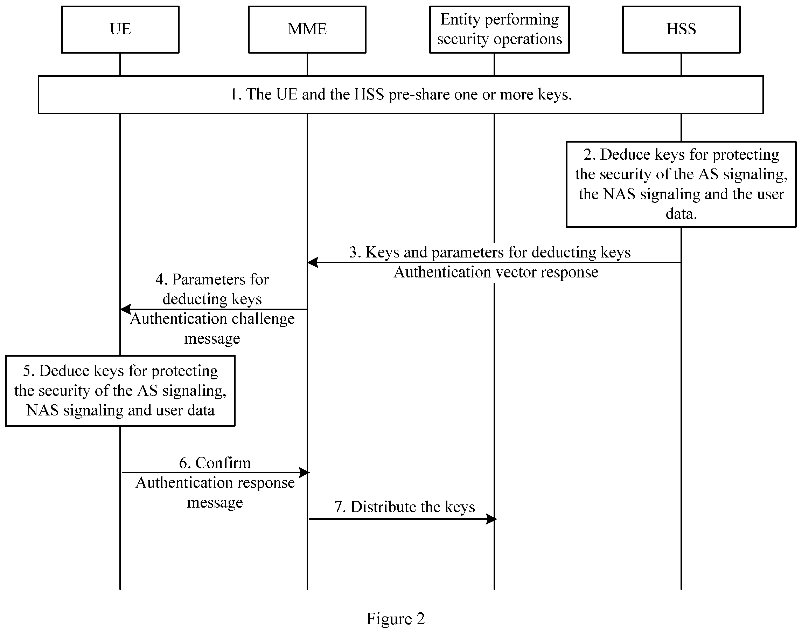

Figure 2 shows a flow chart illustrating the key distribution procedure according to a first embodiment of the present invention. The HSS and the UE are pre-preset with a deduction function KGA for deducing keys for protecting the AS signaling, the NAS signaling and user data according to the shared key. The procedure for deducing and distributing keys includes the following steps:
Step 1: The UE and the HSS pre-share one or more keys.
   Sharing keys on the UE and the HSS may be implemented through setting the same keys on the UE and the HSS. The UE and the HSS may pre-share one or more keys, public/private key pairs or certificates. In this embodiment, the UE and the HSS pre-share a key K.
Step 2: The HSS deduces the keys for protecting the security of the AS signaling, the NAS signaling and user data.
   The HSS utilizes a deduction function KGA to deduce keys CKas and IKas for the AS signaling, CKnas and IKnas for the NAS signaling, CKu and IKu for user data according to the pre-shared key K. The CK is a key providing encryption protection, and the IK is a key providing integrity protection, similarly hereinafter. The key deduction process may also need some parameters, for example, an authentication challenge random number (RAND) generated by the HSS.
   The following describes one example of keys for protecting the AS signaling, the NAS signaling and the user plane. Not all circumstances are described here. In some cases, only CKu is needed if the user plane needs only encryption protection. If the entities performing security operation are identical, the keys may also be the same. For example, If an entity performing security operation for the user plane is identical with that for the AS, the keys protecting the security of the AS signaling may be the same as those protecting the user plane. Upon receiving the keys, the entities performing security operation further deduce the keys actually used to protect the AS signaling, the NAS signaling and user plane. For example, the HSS deduces a key for protecting the user plane security and distributes the key to the entity performing the security operation of the user plane. The entity further deduces a key actually used for protecting the user plane.

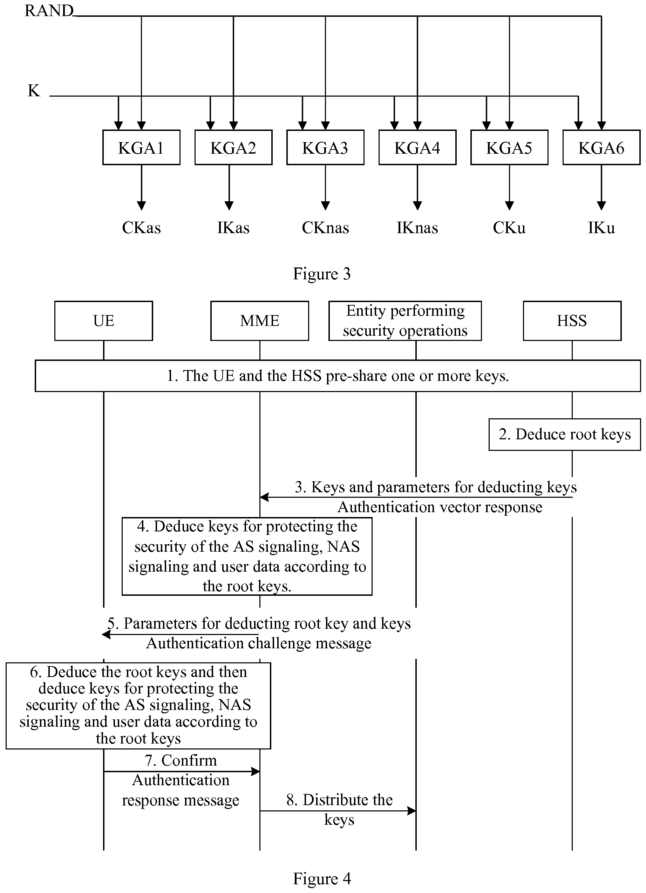

   Figure 3 shows the key deduction mode of the embodiment, that is, the key is deduced based on the deduction function KGA, the shared key K and the RAND. KGA 1-6 are respectively the deduction functions for the keys CKas, IKas, CKnas, IKnas, CKu and IKu. The deduction processes of all keys use the same RAND. The deduction modes may be varied and not limited to the mode shown in Figure 3. For example, the HSS may generate three groups of keys based on a RAND or generate three groups of keys based on different RANDs. The HSS may also generate keys for protecting the NAS signaling according to RANDs, and generate keys for protecting the AS and user data through simple deaggregating and aggregating.
   The key deduction by the HSS may be triggered by a request from the MME. For example, after the MME sends an authentication vector (AV) request, the HSS starts to deduce keys.
Step 3: The HSS sends the deduced keys and the generated RAND to the MME.
   This information may be carried on an AV response message and sent to the MME.
Step 4: The MME sends the RAND to the UE.
   This information may be carried in an authentication challenge message and sent to the UE.
Step 5: The UE deduces keys for protecting the security of the AS signaling, the NAS signaling and user data.
   The UE utilizes the deduction function KGA to deduce keys CKas and IKas for the AS signaling, CKnas and IKnas for the NAS signaling, CKu and IKu for user data according to the pre-shared key K and the RAND generated by the HSS. Because the deduction function, the shared key and the parameter adopted by the UE in the key deduction process are the same as those adopted by the HSS in the key deduction process, the keys deduced by the UE are the same as those deduced by the HSS. Figure 3 shows a deduction mode.
   The UE may include an intelligent card and a terminal. The key deduction may be done in the intelligent card, or in the terminal, or in both the terminal and the intelligent card.
Step 6: The UE sends a confirmation message to the MME.
   The confirmation message may be an authentication response message.
Step 7: The MME distributes the keys received from the HSS to entities performing relevant security operation.

For example, the MME distributes the CKas and the IKas to the evolved access network and the CKu and the IKu to the UPE.

In the above procedure, the MME, before or at the time of sending the RAND to the UE, may distribute the keys received from the HSS to entities performing relevant security operation.

### Embodiment 2

In this embodiment, the HSS and the UE deduce a root key cooperatively. The MME and the UE respectively deduce the keys for protecting the AS signaling, the NAS signaling and user data according to the root key. The MME distributes the keys to the network entities performing relevant security operation.

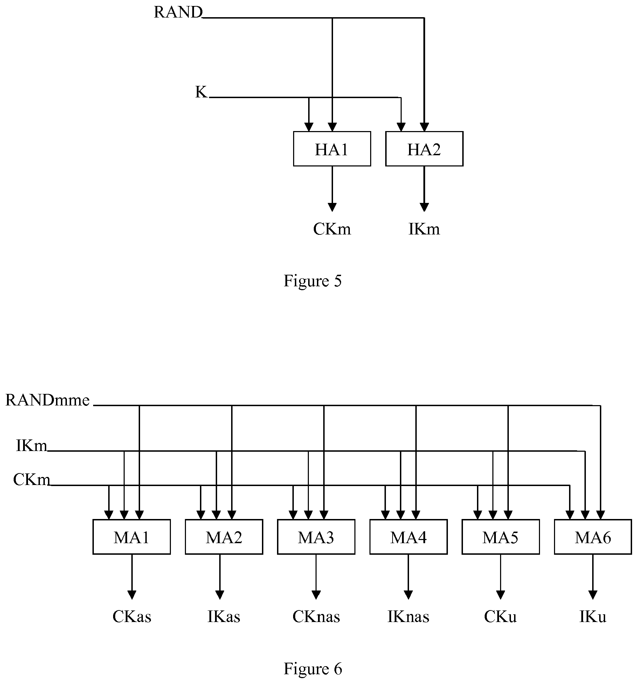

Figure 4 shows a flow chart illustrating the key distributing procedure according to a second embodiment of the present invention. The HSS and the UE are preset with a same deduction function HA of the root key. The MME and the UE are preset with a same deduction function MA for deducing keys for protecting the security of the AS signaling, the NAS signaling and user data. The procedure for generating and distributing keys includes the following steps:
Step 1: The UE and the HSS pre-share one or more keys.
   Sharing keys on the UE and the HSS may be implemented through setting same keys on the UE and HSS. The UE and the HSS may pre-share one or more keys, public/private key pairs or certificates. In this embodiment, the UE and HSS pre-share one key K.
Step 2: The HSS deduces a root key.
   The HSS utilizes the root key deduction function HA to deduce one or more root keys according to the pre-shared key K with the UE. There may exist one or more root key deduction functions, and one or more root keys may be deduced. The root key deduction process may need some other parameters, such as a RAND generated by the HSS. In the embodiment, the root key deduction function HA1 is used to deduce the root cipher key CKm, and the HA2 is used to deduce the root integrity key IKm. The deduction mode is shown in Figure 5. The root key deduction modes may be varied and not limited to the mode shown in Figure 5.
   The root key deduction by the HSS may be triggered by a request from the MME. For example, after the MME sends an authentication vector (AV) request, the HSS starts to deduce keys.
Step 3: The HSS sends the deduced root keys CKm and IKm, and the generated RAND to the MME.
   This information may be carried in an AV response message and sent to the MME.
Step 4: The MME deduces keys for protecting the security of AS signaling, the NAS signaling and user data.
   The MME utilizes the deduction functions HA1-6 to deduce keys CKas and IKas for the AS signaling, CKnas and IKnas for the NAS signaling, CKu and IKu for user data according to the received root keys CKm and IKm. The deduction process may need some other parameters, for example, a RANDmme generated by the MME.

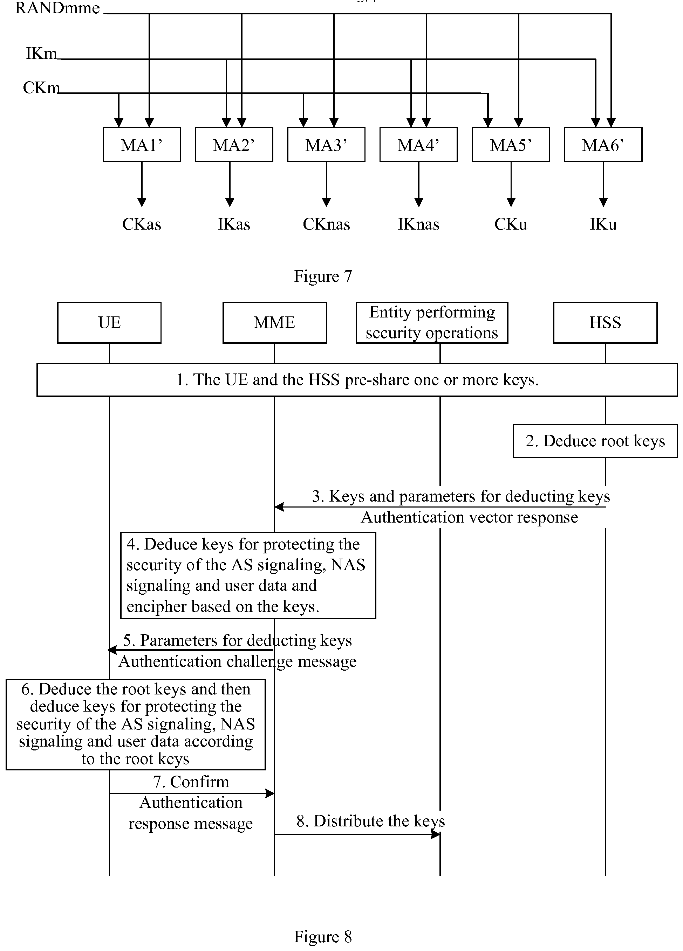

   Figure 6 and Figure 7 respectively show a key deduction mode. The difference lies in the following: in the deduction mode shown in Figure 6, the root keys CKm and IKm are needed for deducing all keys, while in the deduction mode shown in Figure 7, CKm and IKm are respectively needed for deducing the cipher key and the integrity key.
   The deduction modes may be varied and not limited to the modes shown in Figures 6 and 7. The processes that the MME deduces keys for protecting the AS signaling, the NAS signaling and user data may be independent or associated. For example, the MME may generate three groups of keys based on one RAND or generate three groups of keys based on different RANDs. The MME may also generate keys for protecting the NAS signaling according to RANDs, and generate keys for protecting the AS and user data through simple deaggregating and aggregating. The MME may also directly use the root key as the key protecting the security of the NAS signaling or user data.
Step 5: The MME sends the RANDmme and the RAND received from the HSS to the UE.
   This information may be carried in a authentication challenge message and sent to the UE.
Step 6: The UE deduces keys for protecting the security of the AS signaling, the NAS signaling and user data.
   The UE utilizes the root key deduction function to deduce the root key according to the pre-shared key K with the HSS and the RAND.
   Because the deduction function, the shared key and the parameter adopted by the UE in the root key deduction process are the same as those adopted by the HSS in the root key deduction process, the keys deduced by the UE are the same as those deduced by the HSS. The deduction mode is as shown in Figure 5.
   After deducing the root keys, the UE utilizes the deduction functions MA1-6 to deduce keys CKas and IKas for the AS signaling, CKnas and IKnas for the NAS signaling, CKu and IKu for the user data security according to the RANDmme parameter generated by the MME and the root keys CKm and IKm. Because the deduction function, the shared key and the parameter adopted by the UE in the root key deduction process are the same as those adopted by the HSS in the root key deduction process, the keys deduced by the UE are the same as those deduced by the MME. The deduction modes are as shown in Figures 6 and 7.
   The UE may include an intelligent card and a terminal. The deduction of root keys CKm and IKm may be done in the intelligent card or in the terminal. And the CKas, IKas, CKnas, IKnas, CKu and IKu may be deduced in the intelligent card or in the terminal.
Step 7: The UE sends a confirmation message to the MME.
   The confirmation message may be an authentication response message.
Step 8: The MME distributes the generated keys to relevant entities which perform the security operation. For example, the MME distributes the keys CKas and IKas which protect the AS signaling to the evolved access network and distributes the keys CKu and IKu which protect the security of user data to the UPE.

In above procedure, the MME, before or at the time of sending the RAND and the RANDmme to the UE, may distribute the keys deduced to entities performing relevant security operation.

In the embodiment, the UE deduces the root key and keys for protecting the security of the AS, the NAS and the user plane simultaneously. The UE may also deduce these keys separately. That is, the MME first sends the parameters for deducing root keys to the UE. The UE deduces the root key. Then the MME sends the keys for protecting the security of the AS, the NAS and the user plane to the UE. The UE deduces the keys for protecting the security of the AS, the NAS and the user plane according to the root key.

### Embodiment 3

In this embodiment, the HSS and the UPE deduce a root key cooperatively. The MME deduces the keys for protecting the AS signaling, the NAS signaling and user data, and the MME enciphers the keys with the root key and distributes them to the UE and the network entities performing security operation.

Figure 8 shows a flow chart illustrating the key distributing procedure according to a third embodiment of the present invention. The HSS and the UE are preset with the root key deduction function HA. The procedure for deducing and distributing keys includes the following steps:
Steps 1-4 are the same as Steps 1 to 4 in embodiment 2.
Step 5: The MME enciphers the deduced keys for protecting the AS signaling, the NAS signaling and user data with the root key, and sends the enciphered keys to the UE. The process that the MME deduces the keys is the same as that in embodiment 2. The keys may also be deduced through other modes.
   This information may be carried in an authentication challenge message and sent to the UE.
Step 6: The UE deduces the root key and parses the received keys with the root key.
Step 7: The UE sends a confirmation message to the MME.
   The confirmation message may be an authentication response message.
Step 8: The MME distributes the keys to relevant entities which perform security operation.

For example, the MME distributes the CKas and the IKas to the evolved access network and the CKu and the IKu to the UPE. The keys distributed by the MME are not enciphered with the root key.

In above procedure, the MME may distribute the keys to relevant entities performing security operation before or at the time of sending the enciphered keys to the UE.

### Embodiment 4

In this embodiment, the HSS and the UE deduce a root key cooperatively. The MME and the UE respectively deduce the keys for protecting the AS signaling, the NAS signaling and user data according to the root key. The MME distributes the keys to the network entities performing security operation. The network entities performing security operation further deduce keys which protect the AS signaling, the NAS signaling and user data according to the received keys. In the embodiment, the entity protecting the AS also protects the user plane data. Therefore, the key protecting the AS signaling is the same as that protecting user data.

The HSS and the UE are preset with a same deduction function of the root key. The MME and the UE are preset with a same deduction function MA for deducing keys for protecting the AS signaling, the NAS signaling and user data. The procedure for generating and distributing keys includes the following steps:
Step 1: The UE and the HSS pre-share one or more keys.
   For example, the UE and the HSS pre-share one key K in this embodiment,.
Step 2: The HSS deduces a root key.
   The HSS deduces a root key Km according to the pre-shared key K with the UE.
Step 3: The HSS sends the deduced root key Km and parameter needed by the UE for deducing the Km to the MME.
Step 4: The MME sends the parameter needed for deducing the Km to the UE.
Step 5: The UE deduces the root key Km.
Step 6: The MME deduces keys for protecting the AS signaling, the NAS signaling and user data according to the root key received from the HSS.
   The MME deduces keys CKnas and IKnas which protect the NAS signaling and the key Kran which protects the AS and user data. The deduction process may need some other parameters, for example, a RANDmme generated by the MME.
Step 7: The UE receives the parameters for deducing the keys which protect the AS signaling, the NAS signaling and user data. The UE deduces keys CKnas and IKnas which protect the NAS signaling and Kran which protects the AS and user data according to the root key Km deduced by itself.
Step 8: The MME distributes the deduced keys to the entity which protects the security of the NAS signaling and the entity which protects the security of the AS signaling and user data. In this embodiment, the entity protecting the security of the AS signaling also protects the security of user data. The UE and the entity protecting the AS and user data, based on the Kran, deduce the keys actually used to protect the AS and user data, such as CKas, IKas and CKup.

In the preceding embodiments 1 to 4, if the deduction process needs some other parameters and the UE has such parameters, it is unnecessary to send such parameters to the UE.

In the preceding embodiments 1 to 4, the entities performing security operation, upon receiving the keys, may use the keys to protect the communication between the UE and the entities. The entities may also further deduce derivative keys according to the keys received to protect the communication between the UE and the entities. In this case, there may be one key only, such as a root key, rather than two keys.

If the entity protecting the NAS signaling is the same as that protecting user data, the keys protecting the NAS signaling and user data may be the same. For example, in embodiment 1, the CKnas may be the same as the CKu. That is, if the HSS and the UE use the same deduction function to deduce CKnas and CKu, the number of the function used by the HSS and the UE may be reduced. Similarly, if the entity protecting the AS signaling is identical with that protecting user data, the keys protecting the AS signaling and user data may be the same.

Because not all types of information need encryption and integrity protection, some of the keys described in the embodiments may not be needed. For example, if the AS signaling does not need encryption protection, the keys protecting the AS signaling may include the integrity key IKas only. Another example, if the user data does not need integrity protection, the keys protecting the user data may include the cipher key CKu only.

Based on the method for deducing and distributing keys in the evolved network described above, embodiments of the invention provide a system for distributing keys in the evolved network, which will be described in detail below.

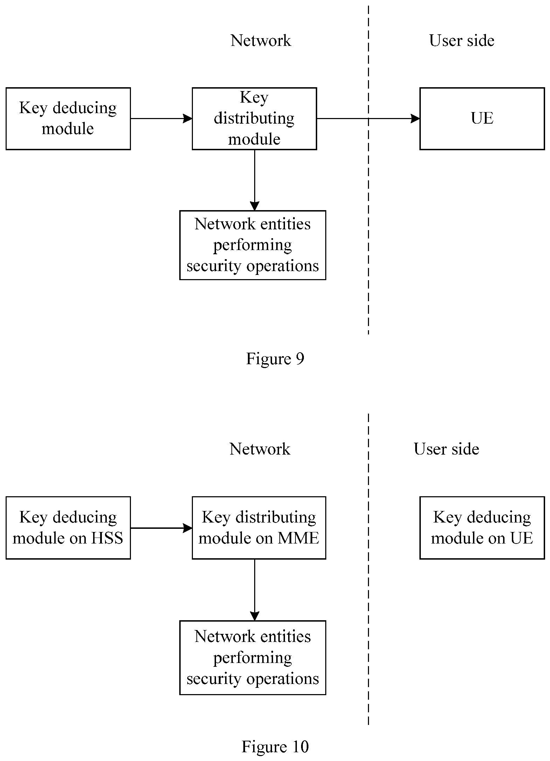

Figure 9 is a schematic diagram of a key distributing system in the evolved mobile communication network according to an embodiment of the present invention. A system for key distribution in the evolved mobile communication network includes: a user side and a network, where the user side includes a UE, and the network includes a key deducing module which deduces keys for protecting the AS signaling, the NAS signaling and user data, a key distributing module, and entities which perform security operation. The key deducing module distributes the deduced keys for protecting the AS signaling, the NAS signaling and user data to the key distributing module. The key distributing module distributes the received keys to entities which perform security operation, or further to the UE. The UE may also deduce keys for protecting the security of the AS signaling, the NAS signaling and user data by itself.

Embodiments of the present invention provide three architectures of the key distributing system.

Figure 10 is a schematic diagram of a first key distributing system according to an embodiment of the present invention. The first key distributing system corresponds to the procedure for deducing and distributing keys described in embodiment 1.

In the system, the key distributing module is located on the MME. The system includes two identical key deducing modules, respectively located on the UE and located on the HSS in the network. The key deducing module on the HSS is connected with the key distributing module on the MME.

The key deducing modules on the HSS and the UE are preset with the same key deducing algorithm, and one or more public/private key pairs or certificates for deducing keys. The key deducing modules on the HSS and the UE deduce the same keys for protecting the AS signaling, the NAS signaling and user data.

The key deducing module on the HSS distributes the deduced keys to the key distributing module on the MME. The key distributing module distributes the keys respectively to network entities performing security operation.

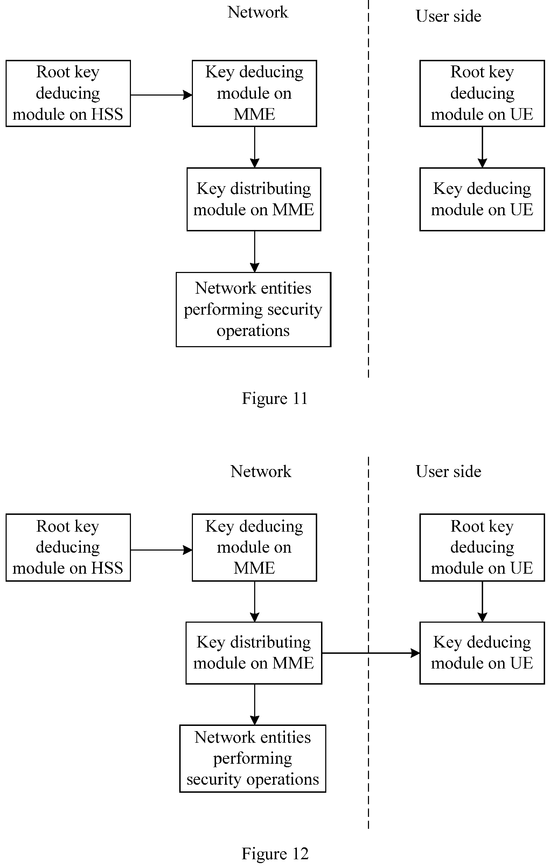

Figure 11 is a schematic diagram of a second key distributing system according to an embodiment of the present invention. A first key distributing system corresponds to the procedure for deducing and distributing keys described in embodiment 1.

In the system, the key distributing module is located on the MME. The system includes two identical key deducing modules, respectively located on the MME in the network and the UE . The key deducing module on the MME is connected with the key distributing module on the MME. The system also includes two identical root key deducing modules, respectively located on the HSS in the network and the UE. The root key deducing module on the HSS is connected with the key deducing module on the MME.

The key deducing modules on the MME and the UE are preset with the same key deducing algorithm, and one or more same public/private key pairs or certificates for deducing keys. The root key deducing modules on the HSS and the UE are preset with the same key deducing algorithm, and one or more same public/private key pairs or certificates for deducing root keys.

The root key deducing module on the HSS deduces the same root key as those deduced by the root deducing module on the UE. The root key deducing module on the HSS sends the deduced root key to the key deducing module on the MME. The key deducing modules on the MME and the UE deduce the same keys for protecting the AS signaling, the NAS signaling and date user according to the same root keys. The key deducing module on the MME distributes the deduced keys to the key distributing module on the MME. The key distributing module distributes the keys respectively to network entities performing relevant security operations.

Figure 12 is a schematic diagram of a third key distributing system according to an embodiment of the present invention. The third key distributing system corresponds to the procedure for deducing and distributing keys described in the Embodiment 3.

In the system, both the key distributing module and the key deducing module are on the MME. The system also includes two root key deducing modules, respectively located on the HSS and the UE. The root key deducing module on the HSS is connected with the key deducing module on the MME. In the system, the UE includes a key deciphering module or key receiving module, which is connected with the root key deducing module on the UE and the key distributing module on the MME.

The root key deducing modules on the HSS and the UE are preset with the same key deducing algorithm, and one or more same public/private key pairs or certificates for deducing root keys. The root key deducing module on the HSS deduces the same root key as those deduced by the root deducing module on the UE. The root key deducing module on the HSS sends the deduced root keys to the key deducing module on the MME. The key deducing module on the MME deduces keys for protecting the AS signaling, the NAS signaling and user data and sends the keys to the key distributing module on the MME. The MME utilizes the received root key to encipher the deduced keys and sends them to the key distributing module on the MME. The distributing module distributes the enciphered keys to the UE and the non-enciphered keys to the network entities performing relevant security operations. Upon receiving the enciphered keys sent by the MME, the key deciphering module on the UE obtains a root key from the root key deducing module on the UE, and utilizes the root key to decipher the keys for protecting the AS signaling, the NAS signaling and user data.

According to the above procedures, a method for distributing keys provided by the embodiments of the invention deduces keys for protecting the AS signaling, the NAS signaling and user data, and distributes the keys to the UE and the network entities performing security operation. Embodiments of the invention provide various methods for deducing and distributing keys, including: the HSS in the network and the UE respectively deduce keys and the MME distributes the keys to network entities performing security operation; or the HSS and the MME in the network deduce keys cooperatively, the MME distributes the keys to network entities performing security operation, and the UE separately deduces keys; or the HSS and the MME in the network deduce keys cooperatively, and the MME distributes the keys to the UE and network entities performing relevant security operation. Embodiments of the invention provide various options and enhance the flexibility of the system.

Although the invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for key deduction in a wireless communication network, comprising:
deducing, by a home subscriber server, HSS, a root key;
sending, by the HSS, the root key to a mobility management entity, MME;
deducing, by the MME, keys for protecting security of an access stratum, AS, signaling, a non-access stratum, NAS, signaling and user data according to the root key.

2. The method according to claim 1, the deducing the root key by the HSS comprises:
deducing, by the HSS, the root key according to a preset deduction function and one or more keys on the HSS, the one or more keys are shared with a user equipment, UE.

3. The method according to claim 1, the deducing, by the MME, the keys according to the root key comprises:
deducing, by the MME, the keys for protecting the security of the AS signaling, the NAS signaling and the user data according to a preset deduction function and the root key.

4. The method according to any one of claims 1-3, wherein:
the keys for protecting the security of the AS signaling further comprises a key for encryption protection and/or a key for integrity protection; the keys for protecting the security of the NAS signaling further comprises a key for encryption protection and/or a key for integrity protection; and the keys for protecting the security of the use data further comprises a key for encryption protection and/or a key for integrity protection.

5. A system for key deduction in a wireless communication network, comprising a home subscriber server, HSS, and a mobility management entity, MME; wherein:
the HSS is configured to deduce a root key and send the root key to the MME;
the MME is configured to deduce keys for protecting security of an access stratum, AS, signaling, a non-access stratum, NAS, signaling and user data according to the root key.

6. The system according to claim 5, wherein the HSS is further configured to:
deduce the root key according to a preset deduction function and one or more keys on the HSS, the one or more keys are shared with a user equipment, UE.

7. The system according to claim 5, wherein the MME is further configured to:
deduce the keys for protecting the security of the AS signaling, the NAS signaling and the user data according to a preset deduction function and the root key.

8. The system according to any one of claims 5-7, wherein:
the keys for protecting the security of the AS signaling further comprises a key for encryption protection and/or a key for integrity protection; the keys for protecting the security of the NAS signaling further comprises a key for encryption protection and/or a key for integrity protection; and the keys for protecting the security of the use data further comprises a key for encryption protection and/or a key for integrity protection.

9. A user equipment, UE, configured to:
deduce a root key according to a preset deduction function and one or more keys on the UE, the one or more keys are shared with a home subscriber server, HSS;
deduce keys for protecting security of an access stratum, AS, signaling, a non-access stratum, NAS, signaling and user data according to the root key.

## Patentansprüche

1. Verfahren zur Schlüsselableitung in einem drahtlosen Kommunikationsnetzwerk, umfassend:
Ableiten eines Root-Schlüssels durch einen "Home Subscriber Server" HSS;
Senden des Root-Schlüssels durch den HSS zu einer Mobilitätsmanagementeinheit MME;
Ableiten von Schlüsseln zum Schützen der Sicherheit einer "Access-Stratum" (AS)-Signalisierung, einer "Non-Access-Stratum" (NAS)-Signalisierung und von Benutzerdaten durch die MME entsprechend dem Root-Schlüssel.

2. Verfahren nach Anspruch 1, wobei das Ableiten des Root-Schlüssels durch den HSS umfasst:
Ableiten des Root-Schlüssels durch den HSS entsprechend einer vorgegebenen Ableitungsfunktion und einem oder mehreren Schlüsseln auf dem HSS, wobei der eine oder die mehreren Schlüssel mit einem Benutzer-Equipment UE geteilt werden.

3. Verfahren nach Anspruch 1, wobei das Ableiten der Schlüssel durch die MME entsprechend dem Root-Schlüssel umfasst:
Ableiten der Schlüssel zum Schützen der Sicherheit der AS-Signalisierung, der NAS-Signalisierung und der Benutzerdaten durch die MME entsprechend einer vorgegebenen Ableitungsfunktion und dem Root-Schlüssel.

4. Verfahren nach einem der Ansprüche 1-3, wobei:
die Schlüssel zum Schützen der Sicherheit der AS-Signalisierung ferner einen Schlüssel zum Schutz der Verschlüsselung und/oder einen Schlüssel zum Schutz der Integrität umfassen; die Schlüssel zum Schützen der Sicherheit der NAS-Signalisierung ferner einen Schlüssel zum Schutz der Verschlüsselung und/oder einen Schlüssel zum Schutz der Integrität umfassen; und die Schlüssel zum Schützen der Sicherheit der Benutzerdaten ferner einen Schlüssel zum Schutz der Verschlüsselung und/oder einen Schlüssel zum Schutz der Integrität umfassen.

5. System zur Schlüsselableitung in einem drahtlosen Kommunikationsnetzwerk, umfassend einen "Home Subscriber Server" HSS und eine Mobilitätsmanagementeinheit MME; wobei:
der HSS ausgelegt ist zum Ableiten eines Root-Schlüssels und Senden des Root-Schlüssels an die MME;
die MME ausgelegt ist zum Ableiten von Schlüsseln zum Schützen der Sicherheit einer "Access-Stratum" (AS)-Signalisierung, einer "Non-Access-Stratum" (NAS)-Signalisierung und von Benutzerdaten entsprechend dem Root-Schlüssel.

6. HSS nach Anspruch 5, wobei der HSS ferner ausgelegt ist zum:
Ableiten des Root-Schlüssels entsprechend einer vorgegebenen Ableitungsfunktion und einem oder mehreren Schlüsseln auf dem HSS, wobei der eine oder die mehreren Schlüssel mit einem Benutzer-Equipment UE geteilt werden.

7. System nach Anspruch 5, wobei die MME ferner ausgelegt ist zum:
Ableiten der Schlüssel zum Schützen der Sicherheit der AS-Signalisierung, der NAS-Signalisierung und der Benutzerdaten entsprechend einer vorgegebenen Ableitungsfunktion und dem Root-Schlüssel.

8. System nach einem der Ansprüche 5-7, wobei:
die Schlüssel zum Schützen der Sicherheit der AS-Signalisierung ferner einen Schlüssel zum Schutz der Verschlüsselung und/oder einen Schlüssel zum Schutz der Integrität umfassen; die Schlüssel zum Schützen der Sicherheit der NAS-Signalisierung ferner einen Schlüssel zum Schutz der Verschlüsselung und/oder einen Schlüssel zum Schutz der Integrität umfassen; und die Schlüssel zum Schützen der Sicherheit der Benutzerdaten ferner einen Schlüssel zum Schutz der Verschlüsselung und/oder einen Schlüssel zum Schutz der Integrität umfassen.

9. Benutzer-Equipment UE, ausgelegt zum:
Ableiten eines Root-Schlüssels entsprechend einer vorgegebenen Ableitungsfunktion und einem oder mehreren Schlüsseln auf dem UE, wobei der eine oder die mehreren Schlüssel mit einem "Home Subscriber Server" HSS geteilt werden;
Ableiten von Schlüsseln zum Schützen der Sicherheit einer "Access-Stratum" (AS)-Signalisierung, einer "Non-Access-Stratum" (NAS)-Signalisierung und von Benutzerdaten entsprechend dem Root-Schlüssel.

## Revendications

1. Procédé pour une déduction de clé dans un réseau de communication sans fil consistant :
à déduire, au moyen d'un serveur d'abonné domestique, HSS, une clé racine ;
à envoyer, au moyen du serveur HSS, la clé racine à une entité de gestion de mobilité, MME ;
à déduire, au moyen de la MME, des clés pour protéger la sécurité d'une signalisation de strate d'accès, AS, d'une signalisation de strate de non accès, NAS, et de données d'utilisateur selon la clé racine.

2. Procédé selon la revendication 1, la déduction de la clé racine par le serveur HSS consistant :
à déduire, au moyen du serveur HSS, la clé racine selon une fonction de déduction prédéfinie et une ou plusieurs clés sur le serveur HSS, la ou les clés étant partagées avec un équipement utilisateur, UE.

3. Procédé selon la revendication 1, la déduction, au moyen de la MME, des clés selon la clé racine consistant :
à déduire, au moyen de la MME, les clés pour protéger la sécurité de la signalisation d'AS, de la signalisation de NAS et des données d'utilisateur selon une fonction de déduction prédéfinie et la clé racine.

4. Procédé selon l'une quelconque des revendications 1 à 3, dans lequel :
les clés pour protéger la sécurité de la signalisation d' AS comprennent en outre une clé pour une protection de cryptage et/ou une clé pour une protection d'intégrité ; les clés pour protéger la sécurité de la signalisation de NAS comprennent en outre une clé pour une protection de cryptage et/ou une clé pour une protection d'intégrité ; et les clés pour protéger la sécurité des données d'utilisation comprennent en outre une clé pour une protection de cryptage et/ou une clé pour une protection d'intégrité.

5. Système pour une déduction de clé dans un réseau de communication sans fil, comprenant un serveur d'abonné domestique, HSS, et une entité de gestion de mobilité, MME, dans lequel :
le serveur HSS est configuré pour déduire une clé racine et pour envoyer la clé racine à la MME ;
la MME est configurée pour déduire des clés pour protéger la sécurité d'une signalisation de strate d'accès, AS, d'une signalisation de strate de non accès, NAS et de données d'utilisateur selon la clé racine.

6. Système selon la revendication 5, dans lequel le serveur HSS est configuré en outre :
pour déduire la clé racine selon une fonction de déduction prédéfinie et une ou plusieurs clés sur le serveur HSS, la ou les clés étant partagées avec un équipement utilisateur, UE.

7. Système selon la revendication 5, dans lequel la MME est configurée en outre :
pour déduire les clés pour protéger la sécurité de la signalisation d'AS, la signalisation de NAS et les données d'utilisateur selon une fonction de déduction prédéfinie et la clé racine.

8. Système selon l'une quelconque des revendications 5 à 7, dans lequel :
les clés pour protéger la sécurité de la signalisation d'AS comprennent en outre une clé pour une protection de cryptage et/ou une clé pour une protection d'intégrité ; les clés pour protéger la sécurité de la signalisation de NAS comprennent en outre une clé pour une protection de cryptage et/ou une clé pour une protection d'intégrité ; et les clés pour protéger la sécurité des données d'utilisation comprennent en outre une clé pour une protection de cryptage et/ou une clé pour une protection d'intégrité.

9. Equipement utilisateur, UE, configuré :
pour déduire une clé racine selon une fonction de déduction prédéfinie et une ou plusieurs clés sur l'UE, la ou les clés étant partagées avec un serveur d'abonné domestique, HSS ;
Pour déduire des clés pour protéger la sécurité d'une signalisation de strate d'accès, AS, d'une signalisation de strate de non accès, NAS, et de données d'utilisateur selon la clé racine.
